# EUROPÄISCHE PATENTANMELDUNG

(11) **EP 1 393 799 A2**
(43) Veröffentlichungstag der Anmeldung: **03.03.2004**
(21) Anmeldenummer: 03090234.0
(22) Anmeldetag: 25.07.2003
(51) Int. Cl.: B01J 19/00

(54) **Mikroreaktor**

(30) Priorität: 02.09.2002 DE 10241093
(71) Anmelder: Siemens Aktiengesellschaft, 80333 München (DE)
(72) Erfinder: Arndt, Frank, 10627 Berlin (DE); Rönsch, Hendrik, 10711 Berlin (DE); Steckenborn, Arno, 13589 Berlin (DE)

(57) **Zusammenfassung**

Beansprucht wird ein Mikroreaktor, bei dem erfindungsgemäß Wechselwirkungspartner (14) an der Reaktionswand (15) imobilisiert sind und an diese Wechselwirkungspartner ein Katalysator (21) gebunden ist. Die Bindung des Katalysators (21) an den Wechselwirkungspartner (14) erfolgt bevorzugt durch Hybridisierung korrespondierender Oligonukleotide. Weiterhin werden Katalysatorpartikel (21) beansprucht, die mittels eines hierfür vorgesehenen Ankopplungspartneres (23) an ortsgebundene Wechselwirkungspartner (14) angelagert werden können. Der erfindungsgemäße Mikroreaktor ist vorteilhaft für eine flexible Verwendung geeignet, da ohne großen Aufwand eine Vielzahl unterschiedlicher Katalysatorpartikel an den Rohrwänden des Reaktionsraumes (12) angelagert werden können. Diese Verbindungen sind auch wieder lösbar, so dass der Mikroreaktor nacheinander für unterschiedliche Reaktionen verwendet werden kann. Der Mikroreaktor eignet sich beispielsweise für das Upstream Processing eines Bioprozesses.

## Beschreibung

Ein solcher Mikroreaktor ist beispielsweise aus dem Abstract zur japanischen Patentanmeldung mit der Nr. 10337173 A bekannt. In diesem Dokument wird ein Mikroreaktor beschrieben, der durch mehrere unabhängige Kammern gebildet ist. Diese Kammern sind für eine Reaktion eines Fluides vorgesehen, welches über Anschlüsse durch die Reaktionskammern geleitet werden kann. Der Abbildung A des genannten Dokumentes ist zu entnehmen, dass den Reaktionskammern, die als Kanal ausgeführt sind, über weitere Zuläufe auch Fluide zugesetzt werden können, wobei in der Reaktionskammer eine Durchmischung erfolgt.

Die Aufgabe der Erfindung besteht darin, einen Mikroreaktor anzugeben, der bei Gewährleistung eines einfachen Aufbaus eine gezielte Steuerung der Reaktion im Reaktionsraum ermöglicht.

Erfindungsgemäß wird die Aufgabe dadurch gelöst, dass Katalysatorpartikel für ein angestrebtes Reaktionsprodukt vorgesehen sind, wobei jeder Katalysatorpartikel mit einem Ankopplungspartner versehen ist und wobei die Ankopplungspartner an Wechselwirkungspartner gebunden sind, welche ihrerseits im Innern des Reaktionsraumes immobilisiert sind. Als Katalysatorpartikel werden in diesem Zusammenhang im weitesten Sinne alle Ausbildungsformen von Mitteln zur Beeinflussung der ablaufenden Reaktion verstanden, deren kleinste geometrische Einheiten sich an die Wechselwirkungspartner binden lassen. Denkbar sind Moleküle, Zellen oder auch anorganische Molekülverbände wie Metallpulver oder Salzkristalle, die die Reaktion verlangsamen, beschleunigen oder überhaupt erst ermöglichen können. Die Anbindung der Katalysatorpartikel an eine innere Oberfläche des Reaktionsraumes, welche insbesondere durch die Innenwand des Mikroreaktors gebildet ist, erfolgt nach dem Prinzip, welches für Analyseverfahren mittels sog. Biochips hinlänglich bekannt ist. Die immobilisierten Wechselwirkungspartner übernehmen dabei die Funktion eines Schlosses, wobei die an die Wechselwirkungspartner zu bindenden Ankopplungspartner der Katalysatorpartikel die Schlüssel sind. Auf diese Weise können geeignete Katalysatorpartikel fest an definierten Orten der inneren Oberfläche des Reaktionsraumes angebracht werden, ohne dass die Reaktionskammer dabei geöffnet werden muss. Voraussetzung hierfür ist lediglich, dass die hierzu notwendigen Wechselwirkungspartner bereits im Reaktionsraum immobilisiert sind.

Gemäß einer vorteilhaften Ausgestaltung der Erfindung ist vorgesehen, dass die Ankopplungspartner und die Wechselwirkungspartner als komplementäre Oligonukleotide ausgeführt sind. Dadurch kann die Bindung der Katalysatorpartikel durch eine Hybridisierung erfolgen. Eine solche Hybridisierungsreaktion lässt sich vorteilhafterweise durch einfaches Erwärmen der Wechselwirkungspartner über einen kritischen Temperaturwert lösen, so dass ein Wechsel des Katalysators im Reaktionsraum ohne weiteres möglich ist. Damit lässt sich der Mikroreaktor vorteilhafterweise ohne großen Umrüstungsaufwand zur Durchführung unterschiedlicher Reaktionen nutzen.

Eine weitere vorteilhafte Ausgestaltung des Mikroreaktors sieht vor, dass dieser als Plug-Flow-Reaktor ausgeführt ist. Unter einem Plug-Flow-Reaktor versteht man einen Mikroreaktor mit einer kanalartigen Struktur, wobei der Querschnitt des gebildeten Kanals so gewählt ist, dass das durchgeleitete Fluid lediglich entlang der Längsausdehnung des Kanals bewegt wird. Dies bedeutet, dass über den Querschnitt des Kanals betrachtet keine Reaktionsgefälle auftreten, so dass jeder Querschnitt des durchgeleiteten Fluides gleich einem "Stopfen", der durch den Reaktionskanal geleitet wird, immer dem gleichen Reaktionsablauf unterworfen ist. Daher lässt sich mit dem Plug-Flow-Reaktor vorteilhafterweise ein Reaktionsverlauf darstellen, der seinen Anfang am Eingang des Plug-Flow-Reaktors nimmt und sein Ende am Ausgang des Plug-Flow-Reaktors findet.

Gemäß einer vorteilhaften Weiterbildung des Plug-Flow-Reaktors ist vorgesehen, dass in Flussrichtung des Fluides gesehen hintereinander verschiedenartige Katalysatorpartikel mit verschiedenartigen Ankopplungspartnern versehen sind und die Ankopplungspartner an jeweils spezifisch auf die Ankopplungspartner abgestimmte Wechselwirkungspartner gebunden sind. Es ist dabei besonders vorteilhaft, die Wechselwirkungspartner im Verlauf des Reaktionskanals in verschiedenen, aufeinanderfolgenden Zonen anzuordnen, so dass in jeder Zone andersartige Katalysatorpartikel an die Wechselwirkungspartner angebunden werden können. Hierdurch ist im Plug-Flow-Reaktor eine Reaktion darstellbar, welche in unterschiedlichen Reaktionsstadien verschiedene Katalysatoren zur Unterstützung der Reaktion benötigt. Damit lassen sich vorteilhafterweise auch komplexe Reaktionsabläufe im Plug-Flow-Reaktor darstellen, weswegen sich dieser insbesondere für ein sog. "Upstream Processing" als Vorlauf zum Auffinden der günstigsten Parameter eines großtechnisch umzusetzenden Reaktionsprozesses eignet.

Eine andere Ausgestaltung der Erfindung sieht vor, dass eine Vielzahl von Reaktionsräumen als Array in dem Mikroreaktor angeordnet sind. Hierdurch lässt sich ein hoher Grad an Parallelisierung erreichen, wodurch vorteilhafterweise mehrere Reaktionen mit jeweils leichter Abwandlung der Reaktionsparameter gleichzeitig durchgeführt werden können. Das bereits erwähnte Upstream Processing lässt sich auf diese Weise durch einen hohen Grad an Parallelisierung sehr effizient, d. h. kostengünstig und in kurzer Zeit, durchführen.

Wird ein Array von Reaktionsräumen verwendet, so ist es vorteilhaft, wenn zumindest ein Teil der Reaktionsräume untereinander fluidisch verbunden ist. Hierdurch kann vorteilhafterweise die Länge der zur Verfügung stehenden Reaktionsräume variiert werden. Insbesondere kann in den unterschiedlichen Reaktionsräumen, die miteinander verbunden werden, wie bereits erwähnt, eine Kombination unterschiedlicher Katalysatorpartikel erreicht werden.

Es ist weiterhin vorteilhaft, wenn mindestens ein Sensor zur Überwachung der angestrebten Reaktion mit dem Mikroreaktor verbunden ist. Hierdurch lässt sich der in dem Mikroreaktor durchgeführte Prozess überwachen bzw. es lassen sich Daten über die Prozessparameter sammeln, wodurch vorteilhafterweise zusätzliche Aussagen über das Zustandekommen der Reaktion ermöglicht werden. Eine Überwachung kann bei transparenten Reaktorwänden beispielsweise optisch erfolgen. Eine andere Möglichkeit ist die Implementierung von Mikrosonden in den Reaktor.

Die Erfindung bezieht sich weiterhin auf Katalysatorpartikel mit einem eine Reaktion beeinflussenden Aufbau. In diesem Zusammenhang wird auf das Allgemeinwissen verwiesen, dem gemäß Katalysatoren unterschiedliche Reaktionen grundsätzlich aufgrund ihres strukturellen Aufbaus beeinflussen. Allgemein bekannte Katalysatorpartikel sind beispielsweise Enzyme, deren Molekülstruktur insbesondere in Lebewesen ablaufende, biochemische Reaktionen ermöglichen.

Die Aufgabe dieser Erfindung besteht darin, Katalysatorpartikel anzugeben, mit denen sich Reaktionen in Mikroreaktoren vergleichsweise einfach steuern lassen.

Zur Lösung dieser Aufgabe ist vorgesehen, dass der Aufbau der Katalysatorpartikel mit einem Ankopplungspartner zur Anbindung des Katalysatorpartikels an einen ortsgebundenen Wechselwirkungspartner versehen ist. Dieser Ankopplungspartner ermöglicht, wie bereits erläutert, die Auskleidung der inneren Oberfläche eines Mikroreaktors mit dem Katalysatorpartikel, wobei zur Aufnahme der Katalysatorpartikel Wechselwirkungspartner an der inneren Oberfläche des Reaktionsraumes imobilisiert sind. Bei Verwendung in einem Mikroreaktor lassen sich daher mit den erfindungsgemäßen Katalysatorpartikeln die bereits erläuterten Vorteile erzielen.

Eine Ausgestaltung dieser Erfindung sieht vor, dass der Ankopplungspartner aus einem Oligonukleotid gebildet ist. Damit können als Wechselwirkungspartner ebenfalls Oligonukleotide verwendet werden, so dass eine Anbindung der Katalysatorpartikel durch eine reversible Hybridisierungsreaktion erfolgen kann. Der wesentliche Vorteil dieser Ausgestaltung der Erfindung liegt in der Reversibilität der Hybridisierungsreaktion, so dass die Katalysatorpartikel von den ortsgebundenen Wechselwirkungspartner wieder entfernt werden können.

Weitere Einzelheiten der Erfindung sind im Folgenden anhand der Zeichnung erläutert. Hierbei zeigen
- Figur 1: den schematischen Aufbau eines Ausführungsbeispiels des erfindungsgemäßen Mikroreaktors,
- Figur 2: das Detail X gemäß Figur 1,
- Figur 3: einen Ausschnitt eines geschnitten dargestellten Ausführungsbeispiels eines Reaktionsraumes des erfindungsgemäßen Reaktors und
- Figur 4: den schematischen Längsschnitt eines Arrays von Reaktionsräumen gemäß einem anderen Ausführungsbeispiel des erfindungsgemäßen Reaktors.

Bei einem Mikroreaktor 11 ist ein kanalartiger Reaktionsraum 12 vorgesehen, in dem in einem ersten Abschnitt 13a und in einem zweiten Abschnitt 13b jeweils als Oligonukleotide ausgebildete Wechselwirkungspartner 14 mit unterschiedlicher Struktur an einer Reaktorinnenwand 15 immobilisiert sind.

Dem Gesamtaufbau des Mikroreaktors 11 lässt sich weiterhin dessen Funktionsweise entnehmen. Dieser wird für ein sog. "Upstream-Processing" wie folgt eingesetzt. Aus einem Vorratsbehälter 16 wird eine Reaktionsflüssigkeit entnommen und mittels einer Pumpe 17 der Reaktionskammer 12, die nach dem Plug-Flow-Prinzip funktioniert, zugeführt. Dabei durchstreicht die Reaktionsflüssigkeit zunächst den ersten Abschnitt 13a, in dem ein erster Katalysator zum Einsatz kommt und anschließend den Abschnitt 13b, bei dem die Reaktion durch einen anderen Katalysator unterstützt wird. Danach verlässt die Probenflüssigkeit den Reaktionsraum und tritt in ein nicht näher dargestelltes Analytikmodul 18 ein. Hier können Daten über das Reaktionsprodukt gesammelt werden, die zu einer Optimierung des zu untersuchenden Prozesses genutzt werden können. Nach der Analyse gelangt die Reaktionsflüssigkeit in einen Abfallbehälter 19, bzw. eventuelle Reaktionsprodukte können über eine Schnittstelle 20 einer weiteren Verwendung zugeführt werden.

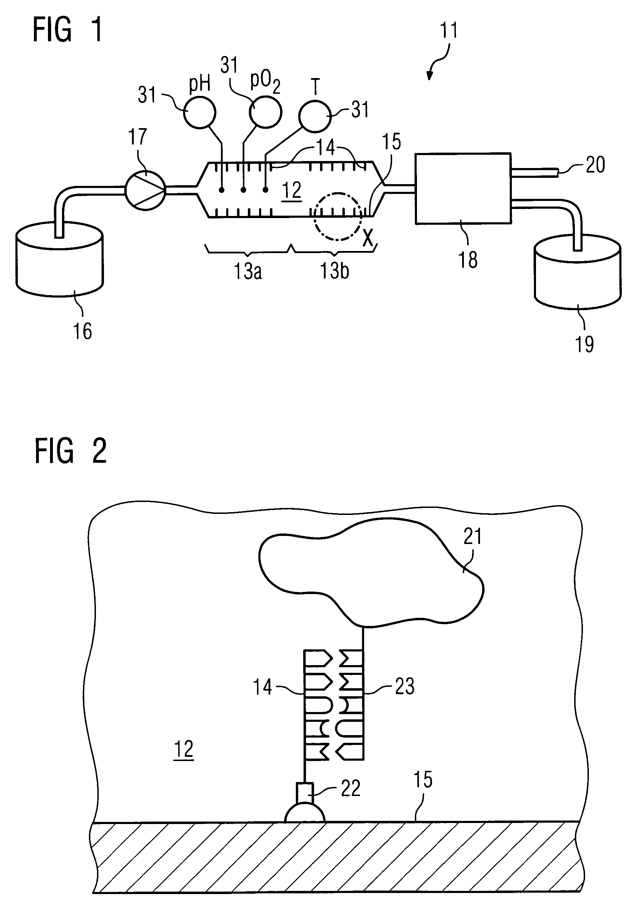

In Figur 2 ist die Wirkungsweise der Anbindung eines Katalysatorpartikels 21 an die Reaktorinnenwand 15 näher dargestellt. Der Wechselwirkungspartner 14, der aus einem Oligonukleotid (d. h. DNA,RNA oder PNA) besteht, ist mit Hilfe allgemein bekannter Kopplungschemie 22 an der Reaktorinnenwand 15 immobilisiert. Der Katalysatorpartikel 21 weist einen nicht näher dargestellten Aufbau auf, der eine bestimmte Reaktion zu beeinflussen geeignet ist. Weiterhin ist dieser Aufbau mit einem Ankopplungspartner 23 in Form eines mit dem Wechselwirkungspartner 14 korrespondierenden Oligonukleotides ausgestattet, so dass durch die beiden Oligonukleotide eine Anbindung des Katalysatorpartikels 21 an die Reaktorinnenwand 15 erfolgen kann.

Der Katalysatorpartikel 21 kann beispielsweise eine Zelle sein, die aufgrund ihrer Funktion an einer biochemischen Reaktion beteiligt ist. Die Anbindung eines Oligonukleotides als Ankopplungspartner ist an eine Zelle ohne weiteres möglich. Eine solche Anbindung kann aber auch mittels einer geeigneten Kopplungschemie (bereits angesprochen) an eine anorganische Substanz erfolgen. Weiterhin ist es denkbar, dass der Ankopplungspartner 23 selbst einen Teil einer längeren Nukleotidkette darstellt, wobei diese gleichzeitig die Funktion des Katalysators übernimmt. Bei dieser Ausführungsform ist der Ankopplungspartner 23 selbst jedoch nicht an der Wirkung als Katalysator beteiligt, da dieser mit dem Wechselwirkungspartner 14 hybridisiert ist.

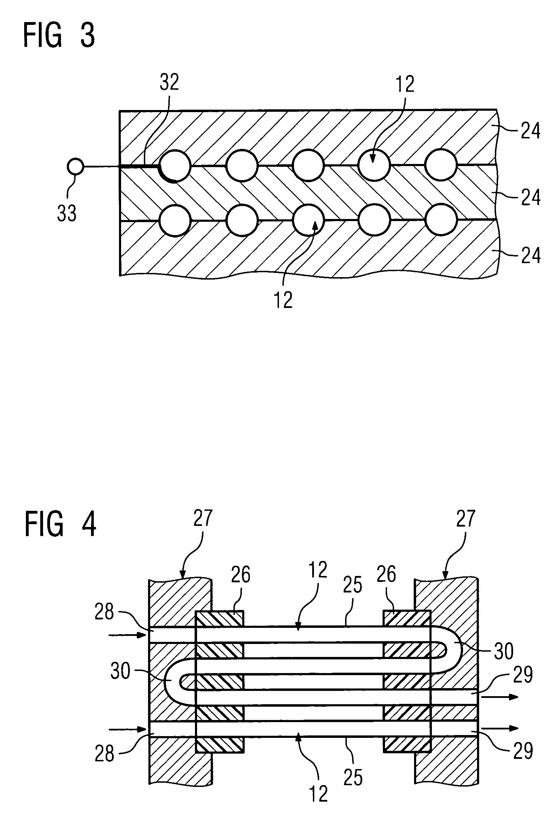

Figur 3 zeigt einen Teilschnitt durch einen möglichen Aufbau eines Mikroreaktors, in dem ein Array von Reaktionsräumen 12 vorgesehen ist. Dieses ist durch Strukturierung der Oberfläche mehrerer Substrate 24 und anschließendes Verbinden dieser Substrate beispielsweise durch Bonden gebildet. Hierdurch entstehen in den Trennfugen zwischen den einzelnen Substraten kanalartige Reaktionsräume.

In Figur 4 ist eine andere Ausgestaltung eines Reaktors mit einem Array von Reaktionsräumen 12 dargestellt. Diese werden durch ein Bündel von Glasrohren 25 gebildet, welche an ihren Enden in Kunststoffträger 26 eingegossen sind. Wie schematisch dargestellt, eignen sich die Kunststoffträger 26 dazu, von Anschlussstücken 27, die Teil eines nicht dargestellten Reaktors sind, aufgenommen zu werden. In diesen Anschlussstücken können Einlässe 28 sowie Auslässe 29 für das Reaktionsfluid vorgesehen sein. Außerdem lässt sich mittels Verbindungskanälen 30 eine Verschaltung einzelner Glasrohre 25 zu einem einzigen Reaktionsraum erreichen. Dargestellt ist eine serielle Verschaltung dreier Glasrohre; denkbar ist doch auch eine parallele Verschaltung, soweit dies einer zu erreichenden Reaktion zuträglich ist.

Den Figuren 1 und 3 kann weiterhin entnommen werden, wie die Reaktionsräume 12 mit einer Sensorik zur Überwachung der ablaufenden Reaktion ausgestattet werden können. In Figur 1 sind als Mikrosonden 31 ausgeführte Sensoren dargestellt, wobei diese, wie angedeutet, zur Messung des pH-Wertes, des Sauerstoffgehaltes (pO₂) und der Temperatur (T) vorgesehen sind. Um Aussagen über die Reaktionsdynamik treffen zu können, können im weiteren Verlauf des Reaktionsraumes beispielsweise im Abschnitt 13b weitere Mikrosonden zur Messung der genannten Werte vorgesehen werden (nicht dargestellt). In Figur 3 ist weiterhin eine Elektrode 32 zur Leitfähigkeitsmessung des Reaktionsfluides dargestellt. Diese kann bei dem in Figur 3 dargestellten Aufbau der Reaktionsräume (Stapel von Substraten) durch metallische Beschichtungen hergestellt werden, welche in den Trennfugen zwischen den Substraten liegen und nach außen mit einem Kontakt 33 versehen sind.

## Patentansprüche

1. Mikroreaktor (11) mit einem Reaktionsraum (12) für ein mindestens ein Reaktionsedukt enthaltendes Fluid,
**dadurch gekennzeichnet,**
**dass** Katalysatorpartikel (21) für ein angestrebtes Reaktionsprodukt vorgesehen sind, wobei jeder Katalysatorpartikel mit einem Ankopplungspartner (23) an Wechselwirkungspartner (14) gebunden ist, welche ihrerseits im Innern des Reaktionsraumes (12) immobilisiert sind.

2. Mikroreaktor nach Anspruch 1,
**dadurch gekennzeichnet,**
**dass** die Ankopplungspartner (23) und die Wechselwirkungspartner (14) als komplementäre Oligonukleotide ausgeführt sind.

3. Mikroreaktor nach einem der vorangehenden Ansprüche,
**dadurch gekennzeichnet,**
**dass** dieser als Plug-Flow-Reaktor ausgeführt ist.

4. Mikroreator nach Anspruch 3,
**dadurch gekennzeichnet,**
**dass** in Flussrichtung des Fluides gesehen hintereinander verschiedenartige Katalysatorpartikel (21) mit verschiedenartigen Ankopplungspartnern (23) versehen sind und die Ankopplungspartner (23) an jeweils spezifisch auf die Ankopplungspartner (23) abgestimmte Wechselwirkungspartner gebunden sind.

5. Mikroreaktor nach einem der vorangehenden Ansprüche,
**dadurch gekennzeichnet,**
**dass** eine Vielzahl von Reaktionsräumen (12) als Array in dem Mikroreaktor angeordnet sind.

6. Mikroreaktor nach Anspruch 5,
**dadurch gekennzeichnet,**
**dass** zumindest ein Teil der Reaktionsräume (12) untereinander fluidisch verbunden ist.

7. Mikroreaktor nach einem der vorangehenden Ansprüche,
**dadurch gekennzeichnet,**
**dass** mindestens ein Sensor (31,32) zur Überwachung der angestrebten Reaktion dem Mikroreaktor zugeordnet ist.

8. Katalysatorpartikel mit einem eine Reaktion beeinflussenden Aufbau,
**dadurch gekennzeichnet,**
**dass** dieser Aufbau mit einem Ankopplungspartner (23) zur Anbindung des Katalysatorpartikels an einen ortsgebundenen Wechselwirkungspartner versehen ist.

9. Katalysatorpartikel nach Anspruch 8,
**dadurch gekennzeichnet,**
**dass** der Ankopplungspartner (23) aus einem Oligonukleotid gebildet ist.
